# EUROPEAN PATENT APPLICATION

(11) **EP 0 599 066 A1**
(43) Date of publication of application: **01.06.1994**
(21) Application number: 93117294.4
(22) Date of filing: 26.10.1993
(51) Int. Cl.: C08J 3/20, C08J 11/06, C08K 3/16, C08K 3/28

(54) **Process for imparting electrostatic dissipative properties to recycled plastics and articles made therefrom**

(30) Priority: 29.10.1992 US 969706
(71) Applicant: The Geon Company, Cleveland, Ohio 44131 (US)
(72) Inventor: Mertzel, Elaine A., Rocky River, Ohio 44116 (US); Boo, H. Khim, Strongsville, Ohio 44136 (US); Kim, Jongshun S., Avon Lake, Ohio 44012 (US)
(74) Representative: von Kreisler, Alek, Dipl.-Chem.

(57) **Abstract**

A novel process has been found wherein electrostatic dissipative properties are imparted to recycled thermoplastics. The discarded waste plastics are divided and soaked in a salt bath for a predetermined amount of time. The treated recycled thermoplastics have a resistivity in the range of approximately 10⁵ to approximately 10¹² Ohms per square. The invention also includes the treated thermoplastic having electrostatic dissipative properties which can be reprocessed into various useful objects.

## Description

### BACKGROUND OF THE INVENTION

### Field of Invention

This invention relates to the novel process of treating discarded or waste thermoplastics to impart electrostatic dissipative properties to these materials. The present invention also relates to the recycled treated thermoplastics having a resistivity in the range of about 10⁵ to about 10¹² Ohms per square which can be reprocessed into various articles. Moreover, the invention relates to plastics exhibiting electrostatic dissipative properties at a relative humidity less than fifteen (15) percent for 24 hours. In addition, the invention relates to articles formed from discarded thermoplastics treated by the novel process of this invention.

### Description of the Art

Thermoplastics are generally considered electrical insulating materials because they do not readily conduct electricity. Thermoplastics are generally inexpensive as compared to other insulating materials. Moreover, there is an abundance of discarded and waste thermoplastics which can potentially be recycled and reused as electrical insulating materials. Reusing and recycling discarded waste thermoplastics is important in controlling pollution and preserving the environment.

Despite the usefulness of thermoplastics and their low cost, thermoplastics may not always be useful for electrostatic applications because of the possible accumulation of electrostatic charge due to their low electrical conductivity. The accumulation of electrostatic charge on plastics may be considerable. An electrostatic charge may build up on thermoplastics during the processing of the plastics such as for example by milling, calendaring, or extruding. Sometimes electrostatic charge can discharge quickly and even cause fires and explosions. In addition, the presence of electrostatic charge can cause dust to adhere to the thermoplastic. Moreover, the presence of static electric charge on sheets of plastics can cause the sheets to adhere to one another, making the handling of these sheets very difficult. Furthermore, electrostatic charge can interfere with the proper functioning of electronic components and devices.

Therefore, a need exists for plastic materials having electrostatic dissipating properties wherein the dissipation can be controlled. That is, the plastic material must have sufficiently low resistivity to cause the bleed off or dissipation of the electrostatic charge. The resistivity cannot be too low because the charge will move very quickly through the material causing an arc or spark. However, the resistivity cannot be too high so as to cause electrostatic discharge.

Resistivity can be further defined as involving surface resistivity and volume resistivity. Volume resistivity is a basic property of homogeneous materials expressed in Ohm-cm. It is determined by measuring the potential across a given thickness and dividing by the current density. Volume resistivity is the inverse measurement of a material's conductivity. Surface resistivity is the electrical resistance measurement, typically measured in Ohms per square, taken at the surface of the material at room temperature.

Surface resistivity is generally the measurement considered in assessing electrostatic dissipating materials. When the surface resistivity is less than or equal to 10⁵ Ohms per square, the plastic composition has little insulating ability and is generally considered conductive. These thermoplastic materials are poor electrostatic dissipating materials because the rate of bleed is high and sparking or arcing occurs. Where the surface resistivity of a material is greater than or equal to 10¹² Ohms per square, the thermoplastic is considered an insulator. In certain applications, such a composition is a poor electrostatic dissipating material. Therefore, it is desirable for electrostatic dissipating materials to typically have a surface resistivity in the range of approximately 10⁵ to 10¹² Ohms per square. Further information involving the evaluation of surface resistivity can be found in American Standard Test Method D257, incorporated herein by reference.

To achieve electrostatic dissipative properties in plastic materials, electrostatic dissipative (hereinafter "ESD") additives can be applied or incorporated or compounded into the plastic. The ESD additives may be added to the plastic material by any coating means such as spraying or dipping. Coating the plastic with ESD additives is generally a temporary solution. Alternatively, ESD additives can be incorporated into the plastic during processing. Incorporating the ESD additives into the plastic provides a greater measure of permanence.

Coating ESD materials onto plastics is problematic due to long term adhesion requirements and interference with surface properties of the plastic. Moreover, the coating can be scraped and removed during further processing of the plastic material.

To prevent static electrical charges from accumulating during the manufacturing of plastic, during formation of articles of manufacture, and during the useful life of the various articles of manufacture, it is well known to employ various types of antistatic agents by incorporating the agents into the plastic during processing. However, the incorporation of the antistatic agents into various plastics creates many problems. For example, the majority of antistatic agents cannot withstand high temperatures and are destroyed or rendered useless with respect to their antistatic abilities during the hot temperature processing required in conventional molding and fabricating steps for forming articles of manufacture. A majority of the antistatic agents are also either cationic or anionic. They tend to cause the degradation of the resins, particularly PVC and ABS, at hot processing temperatures resulting in discoloration or loss of physical properties. Still other antistatic agents are subject to blooming and frequently leave a coating on the surface of the molds, destroy the surface finish on the articles of manufacture, and reduce the dimensional stability when exposed to heat. In severe cases, the surface of the article of manufacture becomes quite oily and marbleized. The most serious problem of antistatic agents is the loss of original physical properties of the resins they incorporate.

Higher molecular weight ESD additives can also be added to plastics to impart antistatic properties to the plastic material. However, sometimes these higher molecular weight ESD materials may not be miscible with the base polymer matrices they are added to, and therefore delamination occurs. Moreover, higher molecular weight ESD additives in polymers may make the polymers hazy. That is the higher molecular weight ESD additives can impart opacity to the composition if the refractive indices of the polymer and the ESD additive differ by more than 0.02. These compositions are then unacceptable for transparency application. Examples of higher molecular weight ESD materials include high molecular weight polymers of ethylene oxide or derivatives thereof like propylene oxide, epichlorohydrin, glycol esters and the polyetheramide block copolymers.

A large number of ESD additives are also either cationic or anionic. These cationic or anionic additives tend to cause the degradation of plastics, resulting in distortion or even the loss of physical properties of the plastic materials. These types of ESD materials especially tend to cause problems with vinyl polymers. In particular, when vinyl polymer, containing these cationic or anionic additives are heated, they discolor.

Although ESD additives are useful to impart electrostatic dissipative properties to various plastics, there exists a need for an inexpensive plastic material having electrostatic dissipative properties which can be easily formed and processed. Moreover, the plastic material should be able to maintain its electrostatic dissipative properties.

Accordingly, a primary object of this invention is a plastic material having electrostatic dissipative properties.

An object of this invention is the method of forming a material having volume resistivity and electrostatic dissipating properties at a low humidity.

Another object of the invention is to obtain plastic material with electrostatic dissipative properties which does not bloom.

Still another object of the invention is to recycle thermoplastic materials so that they possess electrostatic dissipating properties at a very low cost.

Yet an additional object of the invention is to use recycled plastics along with other thermoplastics in electrostatic applications.

Another object of the invention is to incorporate a salt into a thermoplastic to impart electrostatic properties to the thermoplastic.

Still yet an additional object of the invention is to use recycled and reprocessed wire and cable vinyl fluff in electrostatic applications.

### SUMMARY OF THE INVENTION

The foregoing and other aspects, advantages and features of this invention may be achieved by a process of imparting electrostatic dissipative properties to recycled plastics. More particularly, it has been found that if discarded or waste thermoplastics are soaked for predetermined amount of time in a bath containing a salt, the plastic obtains electrostatic dissipative properties. In addition, the invention also relates to the recycled plastics having electrostatic dissipative properties and articles formed therefrom.

### DETAILED DESCRIPTION OF THE INVENTION

Imparting electrostatic dissipative properties to plastic is difficult due to the problems encountered by the addition of ESD additives to the plastics. Moreover, these additives tend to cause problems with the processability and physical properties of the plastics. Therefore, it is important to obtain plastics having electrostatic dissipative properties which can be easily processed and which possess good physical properties.

This invention relates to a method of imparting electrostatic dissipative properties to plastics. More particularly, the invention relates to the use of discarded or waste plastics. This novel method is not only efficient, effective, and inexpensive but it is also beneficial because it permits reuse of discarded and waste thermoplastics.

Any plastic may be used. Preferably, a thermoplastic waste material is used. Most preferably, the waste plastic is waste wire and cable fluff. The wire and cable fluff should be separated from the wire by any method useful in the removal of wire. After the wire is separated from the fluff, it usually comprises approximately 99 percent polyvinyl chloride and approximately 1 percent polyethylene. The wire and cable fluff may also contain other components including copper, aluminum and other fluoropolymers.

Generally, the discarded and waste plastics may contain thermal stabilizers, dyes, flame retardants, smoke suppressants, fillers, plasticizers, impact modifiers, antioxidants, lubricants, processing aids and other conventional additives. These additives do not affect the novel process of this invention.

According to this invention, the discarded or waste plastic material is divided into small particles. For example, the discarded plastic can be ground, shredded, chopped, flaked, sheared, crushed, comminuted, torn or otherwise reduced in size to smaller particles. The preferred method of dividing the waste material is chopping the particles. The small particles are generally from 0.25 cm to 0.5 cm in size. The particle size does not affect the novel process or the resulting material having the electrostatic dissipative properties.

The small particles are then added to a bath. The bath contains a water soluble salt. Preferable salts such as calcium nitrate or calcium chloride are used. The most preferred salt is calcium nitrate. The amount of salt in the bath is determined by the desired density of the bath.

The small particles are generally maintained in the bath from a few seconds to a few minutes dependent upon resident time of the cleaning system. The bath is maintained at room temperature. However, the temperature may be varied and it does not affect the novel process or the material resulting therefrom.

After being removed from the bath, the recycled plastic is spin dried and can then be processed. Generally, the recycled plastic can be blended or mixed with any other compatible plastic. If the preferred wire and cable fluff is recycled, then it is preferred that the recycled fluff is mixed with polyvinyl chloride or polyvinyl chloride compound (hereinafter collectively "PVC compound"). The amount and type of PVC compound admixed with the recycled fluff dictates the resulting properties, such as hardness of the mixture and does not fall within the scope of this invention. However, most preferably, the mixture comprises fifty percent recycled wire and cable fluff and fifty percent PVC.

The recycled plastics or mixtures thereof can be reprocessed by any methods used to process plastics, including blending, injection molding and extruding. The composition formed by the process of the present invention can be useful for a variety of applications. Some examples are tubes, paper trays, floor tiles, business machine components, antistatic mats, tote bins, and so forth.

### EXAMPLES

### Example 1

In this example, discarded wire and cable fluff was treated using the procedure of the present invention. The wire and cable fluff was soaked in the density bath for a short period of time and spin dried. This treated material was compounded with polyvinyl chloride compound ("PVC") to obtain a sample blend of 50% virgin PVC and 50% recycled material. The volume resistivity of this blended sample was 4.5 X 10⁹ Ohms per square, whereas the surface resistivity was 1.2 X 10¹¹ Ohms per square. The table below lists the static decay of the blended sample before and after conditioning at about ten (10) percent relative humidity for nine days. The ten (10) percent cutoff is the amount of time it takes for the material to discharge ninety (90) percent of ± 5000 volt charge. The zero (0) percent cut off is the amount of time it takes for the material to discharge ninety nine point nine (99.9) percent of a ± 5000 volt charge charge.

| | Cut-Offs | |
|---|---|---|
| | 10% | 0% |
| Before conditioning | <0.116 sec. | <0.346 sec. |
| 9 Days conditioning | <0.119 sec. | <0.325 sec. |
| at 10% humidity | | |
| Specification for | <0.2 sec. | <2.0 sec. |
| ESD material | | |

When the formulation of the 50% virgin portion of the compound was modified, the surface resistivity was lowered to 10¹⁰ Ohms/square.

### Example 2

When the same compound as discussed in Example 1 was aged in an air oven at 100°C for 7 days, the surface resistivity remained at 10¹¹ Ohm/square. When a ±5000 volt charge was used to measure the dissipation, no loss in static dissipation property was observed. When the same compound was reprocessed (heated and sheared), the surface resistivity remained unchanged. When the same compound was cleaned by wiping methanol and acetone on the surface, the surface resistivity remained unchanged. The above experiment illustrates the permanence of the static dissipation property of the plastic material.

From the foregoing description, one skilled in the art can easily ascertain the essential characteristics of the invention and without departing from the spirit and scope thereof make various changes and modifications of the invention and adapt it to various usages and conditions. Accordingly, the whole of the foregoing description is to be construed in an illustrative and not in a limitive sense.

## Claims

1. A process for imparting electrostatic dissipative properties to thermoplastic comprising dividing the plastic into smaller particles, soaking the divided particles in a bath containing a water soluble salt for a predetermined amount of time, removing the particles from the bath, and drying the particles.

2. A process as claimed in claim 1, wherein said plastic is divided into cubes.

3. A process as claimed in claim 1, wherein said plastic is divided into pellets.

4. A process as claimed in claim 1, wherein the plastic is divided by chopping.

5. A process as claimed in claim 1, wherein said water soluble salt is selected from the group consisting of calcium nitrate and calcium chloride.

6. A process as claimed in claim 1, wherein said dried particles attain a resistivity in the range of about 10⁵ to about 10¹² Ohms per square.

7. A process as claimed in claim 1, wherein said thermoplastic is chosen from the group consisting of any discarded thermoplastics, wire and cable fluff, and recycled polyvinyl chloride compounds.

8. A recycled thermoplastic having electrostatic dissipative properties comprising the product of a discarded thermoplastic which is divided into small particles, said small particles are soaked in a salt bath for a predetermined amount of time, wherein the salt is chosen from the group consisting of calcium nitrate and calcium chloride, and said particles are removed from the bath and dried.

9. A thermoplastic as claimed in claim 7 wherein said dried small particles have a resistivity of about 10⁵ to about 10¹² Ohms per square.
